# EUROPEAN PATENT SPECIFICATION

(11) **EP 2 909 049 B1**
(45) Date of publication and mention of the grant of the patent: **29.03.2017**
(21) Application number: 13820850.9
(22) Date of filing: 11.10.2013
(51) Int. Cl.: B60C 9/20, B60C 9/22, B60C 9/18, B60C 9/00, B60C 1/00

(54) **A REINFORCING BELT PACKAGE FOR RADIAL VEHICLE TIRES**
VERSTÄRKUNGSGÜRTELVERPACKUNG FÜR RADIALE FAHRZEUGREIFEN
EMBALLAGE DE CEINTURE DE RENFORCEMENT POUR PNEUS DE VÉHICULE RADIAUX

(30) Priority: 18.10.2012 TR 201212029
(43) Date of publication of application: 26.08.2015
(73) Proprietor: Kordsa Global Endustriyel Iplik ve Kord Bezi Sanayi ve Ticaret Anonim Sirketi, 41310 Kocaeli (TR)
(72) Inventor: AKSOY, Kürsat, Kocaeli (TR); MERTOL, Bekir, Anil, Kocaeli (TR); FIDAN, Sadettin, 30827 Garbsen (DE)
(74) Representative: Dericioglu Kurt, Ekin
(86) International application number: PCT/IB2013/002286
(87) International publication number: WO 2014/060819

(56) References cited:
- WO-A1-2005/002884
- JP-A- S6 483 406
- JP-A- S61 119 408
- JP-A- 2004 217 127
- US-A- 5 351 735

## Description

### Field of the Invention

The present invention relates to a reinforcing belt package for radial vehicle tires which is wound between the tread and the carcass in tires used in motor vehicles, increases the cornering resistance and their lifetime.

### Background of the Invention

In the belt packages present in the radial vehicles tires used today, there is at least two cross belt layers and a circumferential belt reinforcement. The said cross belt layers are made of steel cords and provide the sufficient lateral and circumferential stiffness. However, there are a lot of cut ends in the said layers. The said cut ends affect the cord-rubber adhesion negatively, cause the tire dynamic to deteriorate by causing cracks at the edges of the layer. This requires the use of a separate belt layer(cap ply) for high speed performances.

European Patent document no EP1000972, an application known in the state of the art, discloses short-fiber reinforced rubber reinforcement belts in order to be used in vehicle tires. The steering stability and the rolling resistance of the vehicle is increased by means of the said belts.

European Patent document no EP1310385, another application known in the state of the art, discloses a vehicle tire comprising rubber layer reinforced with short fibers in the steel wire part which is under the rim. The said short fibers are directed towards the circumferential direction of the tire.

International Patent document no WO 2005/002884, another application known in the state of the art, discloses a tire comprising two conventional belt layer made of steel cords(working layers) and circumferenrial cap ply having alternating hybrid cords and lower modulus cords.

Japanese Patent document no JP2004217127 which is considered as the closest state of the art, represents a motocycle tire contains a regular steel breaker and additional layer with alternating steel and aramid cords.

Japanese Patent document no JP61119408 is another application known in the state of the art, which discloses that the short fibers having less than 1micron lengths are used as filler in belt compounds. Increased compound modulus results are obtained by reducing shear strains. Those compounds are used together with conventional steel cords.

### Summary of the Invention

The objective of the invention is to provide a reinforcing belt package for radial vehicle tires which is wound between the tread and the carcass of the tires.

Another objective of the present invention is to provide a reinforcing belt package for radial vehicle tires which increases the durability of the tire in cases wherein the vehicle should have good cornering stiffness and high speed performance.

A further objective of the present invention is to provide a reinforcing belt package for radial vehicle tires which comprises both metal cords and the polymeric cords.

Yet another objective of the present invention is to provide a reinforcing belt package for radial vehicle tires which is reinforced with short fibers.

### Detailed Description of the Invention

The reinforcing belt package for radial vehicle tires to fulfill the objective of the present invention is illustrated in the accompanying figures wherein,

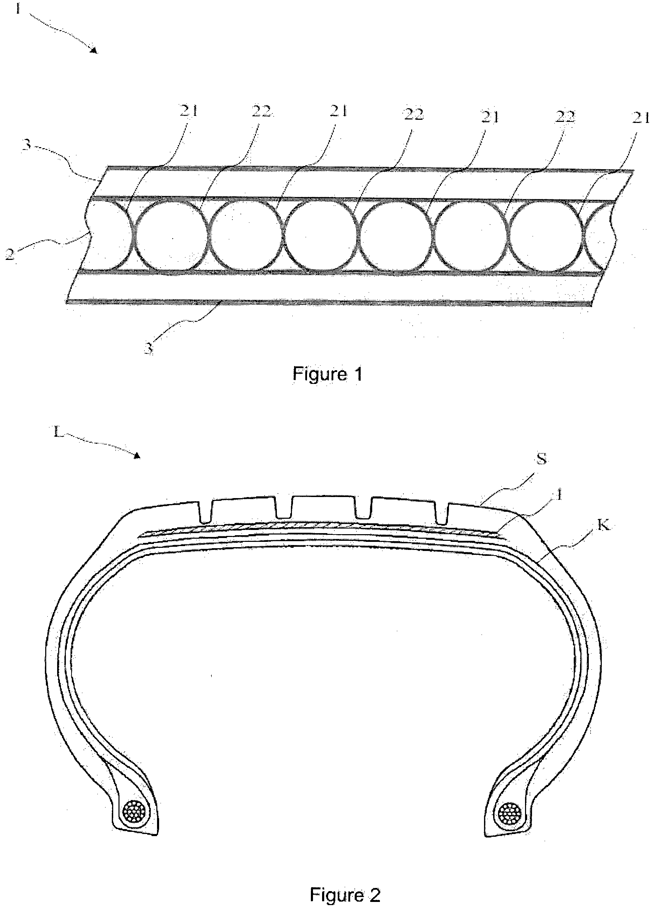

Figure 1 is the transverse sectional view of the inventive reinforcing belt package for radial vehicle tires.
Figure 2 the cross sectional view of a vehicle tire on the inventive reinforcing belt package is applied.

The components in the figures are assigned reference numerals as follows:
1. Reinforcing belt package
2. Circumferential belt
   21. Metallic cord (Steel cord)
   22. Polymeric cord
3. Rubber layer
S. Tread
K. Carcass
L. Tire

The reinforcing belt package for radial vehicle tires (1) essentially comprises
- at least one circumferential belt layer (2) which is formed by arranging the metallic cords (21) and the polymeric cords (22) following each other such that polymeric cord (22) will follow after the metallic cord (21), metallic cord (21) will follow after the polymeric cord (22),
- at least one rubber layer (3) which covers above and below the circumferential belt layer (2).

The circumferemtial belt layer (2) is made by winding a strip layer at 0 - 5° relative to the equatorial plane. The strip layer is obtained by arranging the metal cords (21) comprised of twisted monofilaments and polymer cords (22) comprised of twisted monofilaments next to each other and putting it between two rubber layers (3). In the preferred embodiment of the invention, the width of the circumferential belt strip (2) may vary between 5-25 mm. The distance between the cords (21, 22) is 0-0.25mm based on the cord (21, 22) surfaces.

In the preferred embodiment of the invention, the metallic cord (21) is comprised of steel material. Nylon 6.6, nylon 4.6, polyethylene terephthalate, polyethylene naphthalate cords or aramide-nylon hybrid cords are used as polymeric cord (22).

In the preferred embodiment of the invention, the steel cords (21) are formed by twisting the monofilaments having the diameter of 0.12-0.45mm. The said monofilaments can have normal, high, super and ultra breaking strength (NT, HT, ST and UT). Polymeric cords (22) are formed by twisting the monofilaments having the diameter of 0.1-0.5mm.

In the preferred embodiment of the invention, the twist level of the steel cords (21) is 50-200tpm (twist per meter), the twist length(lay length) is between 5-20mm. The twist level of the polymeric cords (22) is between 20-500tpm. Twist lengths of the steel and polymeric cords may be same or different.

The total end count (21, 22) is 50-250 epdm (ends per decimeter). The linear density of the steel cord (21) and the polymeric cord (22) can be equal or different.

The rubber layer (3) is a layer comprised of short fibers which are arranged transversally to the circumferential belt layer (2) such that it will resist to lateral compression and expansion of the belt (2). Two rubber layers (3) and the circumferential belt (2) are located inside the tire (L) such that they will form a sandwich. In the preferred embodiment of the invention, the short fibers are comprised of aramide, rayon, polyester and/or polyamide material. The elastic modulus of the short fiber used in the said rubber layer (3) is between 5-600 GPa.

The inventive reinforcing belt package for radial vehicle tires (1) is located between the tread (S) and carcass (K) layers of the tires (L). The said belt package (1) eliminates the metal-metal fretting and the wearing problem occurring as a result of the lateral compression in vehicle tires (L) during cornering and decreases the weight of the tire. Furthermore, in the inventive belt package (1), the absence of the cut ends increases the durability and life of the tire (L).

Within the scope of these basic concepts, it is possible to develop various embodiments of the inventive reinforcing belt package for radial vehicle tires (1). The invention cannot be limited to the examples described herein; it is essentially as defined in the claims.

## Claims

1. A reinforcing belt package (1) for radial vehicle tires which is wound in strips between the tread (S) and carcass (K) of the tires (L) such that it will have 0-5° between the equatorial plane, and essentially comprising
- at least one circumferential belt (2) which is formed by arranging the metallic cords (21) and the polymeric cords (22) following each other such that polymeric cord (22) will follow after the metallic cord (21), metallic cord (21) will follow after the polymeric cord (22) and wherein metal cords (21) are obtained by twisting steel monofilaments, and polymer cords (22) are obtained by nylon 6.6, nylon 4.6, polyethylene terephthalate, polyethylene naphthalate or aramide-nylon hybrid monofilaments and **characterized by**
- at least two rubber layers (3) which cover above and below the circumferential belt (2), and which are comprised of short fibers comprised of aramide, rayon, polyester and/or polyamide material and arranged transversally to the circumferential belt (2)

2. A reinforcing belt package for radial vehicle tires (1) according to Claim 1, **characterized by** circumferential belt (2) which is obtained by winding the strip having the width of 5-25mm around carcass.

3. A reinforcing belt package for radial vehicle tires (1) according to any one of the preceding claims, **characterized by** circumferential belt (2) wherein the distance between the cords (21, 22) is between 0-0.25mm based on the cord (21, 22) surfaces.

4. A reinforcing belt package for radial vehicle tires (1) according to any one of the preceding claims, **characterized by** circumferential belt (2) which has steel cords (21) formed by twisting the monofilaments having the diameter of 0.12-0.45mm.

5. A reinforcing belt package for radial vehicle tires (1) according to any one of the preceding claims, **characterized by** circumferential belt (2) which has polymeric cords (22) formed by twisting the monofilaments having the diameter of 0.1-0.5 mm.

6. A reinforcing belt package for radial vehicle tires (1) according to any one of the preceding claims, **characterized by** circumferential belt (2) having steel cords (21) the twist level of which is 50-200 tpm (twists per meter), and the twist length(lay length) of which is 5-20mm.

7. A reinforcing belt package for radial vehicle tires (1) according to any one of the preceding claims, **characterized by** circumferential belt (2) having polymeric cords (22) the twist level of which is 20-500 tpm (twists per meter).

8. A reinforcing belt package for radial vehicle tires (1) according to any one of the preceding claims, **characterized by** circumferential belt (2) wherein the total end count (21, 22) is 50-250 epdm (ends per decimeter).

9. A reinforcing belt package for radial vehicle tires (1) according to any one of the preceding claims, **characterized by** two rubber layers (3) having short filaments the elastic modulus of which are between 5-600 GPa.

## Patentansprüche

1. Ein Verstärkungsgürtelpaket für radiale Fahrzeugreifen (1), welches zwischen dem Reifenprofil (S) und dem Reifenunterbau (K) des Reifens (L) in Streifen so gewickelt ist, daß es mit der Äquatorialebene einen Winkel between 0 - 5° bildet und hauptsächlich umfassend,
- zumindest einen umlaufenden Gürtel (2), welcher durch Anordnung von metallischen Reifencords (21) und polymeren Reifencords (22) gebildet wird, die aufeinander derart angeordnet sind, daß der polymere Reifencord (22) einem metallischen Reifencord (21) und der metallische Reifencord (21) einem polymeren Reifencord (22) folgen soll und wobei die metallischen Reifencords (21) durch Verdrehen der Stahlmonofilamente erhalten sind und die polymeren Reifencords (22) durch Nylon 6.6., Nylon 4.6, Polyäthylen Terephtalat, Polyäthylen Naphthalat oder Aramid-Nylon hybride Monofilen erhalten sind und **gekennzeichnet durch**
mindestens zwei Gummischichten (3), welche von oben sowie von unten den umlaufenden Gürtel (2) abdecken und welche **durch** kurzen Fasern aus Aramid, Reyon, Polyester und/oder Polyamid-Material gebildet und dem umlaufenden Gürtel quer angeordnet sind.

2. Ein Verstärkungsgürtelpaket für radiale Fahrzeugreifen (1) gemäß Anspruch 1, **gekennzeichnet durch** den umlaufenden Gürtel (2), welcher durch Aufwicklung des Streifens mit einer Breite von 5-25 mm um den Reifenunterbau erhalten worden ist.

3. Ein Verstärkungsgürtelpaket für radiale Fahrzeugreifen (1) gemäß einem der vorangehenden Ansprüche, **gekennzeichnet durch** den umlaufenden Gürtel (2), wobei der Abstand zwischen den Reifencords (21, 22) auf der Grundlage von Reifencord-Oberflächen in einem Bereich von 0 - 0.25 mm liegt.

4. Ein Verstärkungsgürtelpaket für radiale Fahrzeugreifen (1) gemäß einem der vorangehenden Ansprüche, **gekennzeichnet durch** den umlaufenden Gürtel (2), welcher Stahl-Reifencords (21) aufweist, die **durch** Verdrehen der Monofilamente mit einem Durchmesser von 0.12-0.45 mm gebildet sind.

5. Ein Verstärkungsgürtelpaket für radiale Fahrzeugreifen (1) gemäß einem der vorangehenden Ansprüche, **gekennzeichnet durch** den umlaufenden Gürtel (2), welcher polymere Reifencords (22) aufweist, die **durch** Verdrehen der Monofilamente mit einem Durchmesser von 0.1-0.5 mm gebildet sind.

6. Ein Verstärkungsgürtelpaket für radiale Fahrzeugreifen (1) gemäß einem der vorangehenden Ansprüche, **gekennzeichnet durch** den umlaufenden Gürtel (2) mit Stahl-Reifencords (21), deren Verdrehungsniveau 50-200 tpm (twists per meter/Verdrehungen per Meter) ist.

7. Ein Verstärkungsgürtelpaket für radiale Fahrzeugreifen (1) gemäß einem der vorangehenden Ansprüche, **gekennzeichnet durch** den umlaufenden Gürtel (2) mit polymeren Reifencords (22), deren Verdrehungsniveau 20-500 tpm (twists per meter(Verdrehungen per Meter) ist.

8. Ein Verstärkungsgürtelpaket für radiale Fahrzeugreifen (1) gemäß einem der vorangehenden Ansprüche, **gekennzeichnet durch** den umlaufenden Gürtel (2), wobei die Gesamtzahl der Enden (21, 22) 50-250 epdm (end per decimeter/Enden per Dezimeter) beträgt.

9. Ein Verstärkungsgürtelpaket für radiale Fahrzeugreifen (1) gemäß einem der vorangehenden Ansprüche, **gekennzeichnet durch** zwei Gummischichten (3) mit kurzen Fäden, deren Elastizitätsmoduln zwischen 5-600 GPa sind.

## Revendications

1. Paquet de ceinture de renforcement (1) pour pneumatiques radiaux de véhicule qui est enroulé en bandes entre la chape (S) et la carcasse (K) des pneumatiques (L) de telle sorte qu'il aura 0-5 ° entre le plan équatorial, et comprenant essentiellement
- au moins un ceinture circonférentiel (2) qui est formé en disposant les cordons métalliques (21) et les cordons polymèriques (22) l'une après l'autre de telle sorte que le cordon polymérique (22) suivra après le cordon métallique (21), le cordon métallique (21) suivra après le cordon polimérique (22) et dans lequel les cordons métalliques (21) sont obtenus par torsion de monofilaments d'acier, et les cordons polymèriques (22) sont obtenus par nylon 6.6, nylon 4.6, polyéthylène téréphtalate, polyéthylène naphtalate ou aramide-nylon hybride monofilaments et **caractérisé par**
- au moins deux couches de caoutchouc (3) qui recouvrent au-dessus et au-dessous du ceinture circonférentiel (2), et qui sont constituées de fibres courtes constituées de matériau aramide, rayonne, polyester et / ou polyamide et disposées transversalement au ceinture circonférentielle (2)

2. Paquet de ceinture de renfort pour pneumatiques radiaux de véhicule (1) selon la revendication 1, **caractérisé par** un ceinture circonférentiel (2) qui est obtenu par enroulement de la bande ayant une largeur de 5 à 25 mm autour de la carcasse,

3. Paquet de ceinture de renforcement pour pneumatiques radiaux de véhicule (1) selon l'une quelconque des revendications précédentes, **caractérisé par** un ceinture circonférentiel (2) dans lequel la distance entre les cordons (21, 22) est comprise entre 0 et 0,25 mm basé sur les surfaces du cordon (21, 22).

4. Paquet de ceinture de renforcement pour pneumatiques radiaux de véhicule (1) selon l'une quelconque des revendications précédentes, **caractérisé par** le ceinture circonférentiel (2) qui présente des cordons d'acier (21) formés par torsion des monofilaments ayant un diamètre de 0,12 à 0,45 mm.

5. Paquet de ceinture de renforcement pour pneumatiques radiaux de véhicule (1) selon l'une quelconque des revendications précédentes, **caractérisé par** le ceinture circonférentiel (2) qui présente des cordons polymèriques (22) formés par torsion des monofilaments ayant un diamètre de 0,1 à 0,5 mm.

6. Paquet de ceinture de renforcement pour pneumatiques radiaux de véhicule (1) selon l'une quelconque des revendications précédentes, **caractérisé par** un ceinture circonférentiel (2) ayant des cordons d'acier (21) dont le niveau de torsion est de 50 à 200 tpm (torsions par mètre), et la longueur de torsion (longueur de pose) est de 5-20 mm.

7. Paquet de ceinture de renforcement pour pneumatiques radiaux de véhicule (1) selon l'une quelconque des revendications précédentes, **caractérisé par** le ceinture circonférentiel (2) ayant des cordons polymèriques (22) dont le niveau de torsion est de 20 à 500 tpm (torsions par mètre).

8. Paquet de ceinture de renforcement pour pneumatiques radiaux de véhicule (1) selon l'une quelconque des revendications précédentes, **caractérisé par** un ceinture circonférentiel (2) dans lequel le dénombrement de bouts total (21, 22) est de 50 à 250 epdm (bouts par décimètre).

9. Paquet de ceinture de renforcement pour pneumatiques radiaux de véhicule (1) selon l'une quelconque des revendications précédentes, **caractérisé par** deux couches de caoutchouc (3) ayant des filaments courts dont le module élastique est compris entre 5-600 GPa.
